(19) Europäisches Patentamt
European Patent Office
Office européen des brevets

(11) Publication number: **0 164 923**
**B1**

(12) # EUROPEAN PATENT SPECIFICATION

(45) Date of publication of patent specification: **03.08.88**

(51) Int. Cl.$^4$: **C 07 F 9/38**

(21) Application number: **85303444.5**

(22) Date of filing: **16.05.85**

(54) **Method for preparation of N-phosphonomethylglycine.**

(30) Priority: **04.06.84 US 617209**

(43) Date of publication of application:
**18.12.85 Bulletin 85/51**

(45) Publication of the grant of the patent:
**03.08.88 Bulletin 88/31**

(84) Designated Contracting States:
**AT BE CH DE FR GB IT LI NL SE**

(56) References cited:
**EP-A-0 097 522**

(73) Proprietor: **STAUFFER CHEMICAL COMPANY**
**Westport Connecticut 06881 (US)**

(72) Inventor: **Dinizo, Stephen Edward**
**580 Paseo Del Rio**
**San Lorenzo, CA 94580 (US)**
Inventor: **Djafar, Roger Rachid**
**No. 1 Seamast Passage**
**Corte Madera, CA 94925 (US)**

(74) Representative: **Smith, Sydney et al**
**Elkington and Fife**
**High Holborn House**
**52/54 High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 164 923 B1

**Description**

Field of the Invention

This invention relates to an improved process for preparing N-phosphonomethylglycine in high purity and in high yields.

Background of the Invention

Certain salts prepared from N-phosphonomethylglycine are effective as post-emergence herbicides.

U.S. Patent 4,427,599 relates to a process for preparing N-phosphonomethylglycine by:

(1) reacting 1,3,5-tricyanomethylhexahydro-1,3,5-triazine with an acyl halide, preferably acyl chloride to form the N-cyanomethyl-N-halomethyl amide of the acyl halide;

(2) reacting the amide with a phosphite to form N-acylaminomethyl-N-cyanomethyl phosphate; and

(3) hydrolyzing this phosphonate to yield N-(phosphonomethyl)glycine.

More specifically this prior art patent teaches a process illustrated by the following reaction scheme:

a) 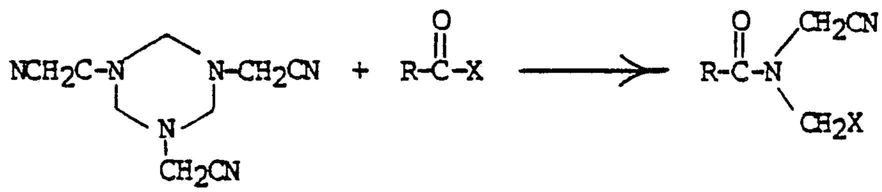

wherein R is an aliphatic or aromatic group as defined therein, preferably $C_1$—$C_4$ alkyl, most preferably methyl or ethyl and X is chlorine, bromine, or iodine, preferably chlorine.

b) 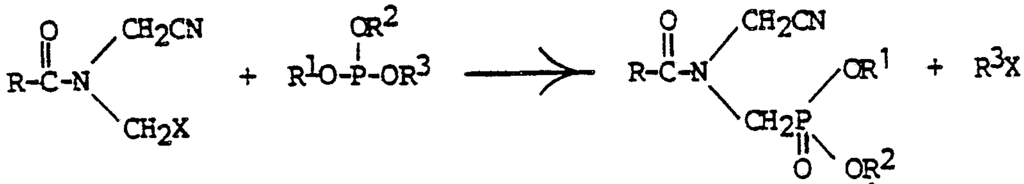

wherein R and X are defined as above and $R^1$ and $R^2$ are both aromatic groups or both aliphatic groups, preferably $R^1$ and $R^2$ are $C_1$—$C_6$ alkyl, more preferably $C_1$—$C_4$ alkyl, and $R^3$ is an aliphatic group, preferably $R^3$ is $C_1$—$C_6$ alkyl, more preferably $C_1$—$C_4$ alkyl or $R^3$ is an alkali metal (M), preferably sodium or potassium.

c) 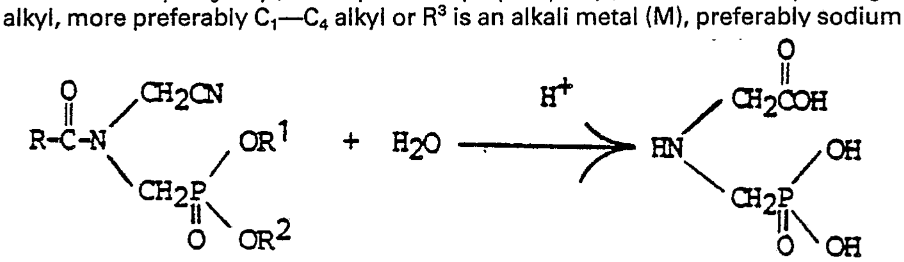


wherein R, $R^1$ and $R^2$ are as defined above and $H^+$ is a strong acid such as hydrochloric, hydrobromic, hydriodic, nitric, sulfuric, phosphonic or chloroacetic acid. Preferably $H^+$ is hydrochloric or hydrobromic acid. Preferably, the hydrolysis is run in the presence of a strong acid.

U.S. Patent 4,427,599 teaches that a solvent such as ethylene chloride can be used in step (b) and that any solvent used in step (b) will be removed after completion of reaction step (c).

U.S. Patent 4,427,599 also teaches that in reaction step (c), a mole of the phosphonate reaction product from reaction step (b) is hydrolyzed with 5 moles of water. The hydrolysis is run in the presence of a strong acid as defined. Preferably the hydrolysis is acid-catalyzed, and at least 2 mole of the acid are used and more preferably, a large excess over the 2 mole amount is used.

This last reaction step is taught to be run at a temperature between about 0 to about 200°C, preferably between about 50° to about 125°C and most preferably between about 100° to about 125°C.

Atmospheric, sub-atmospheric or super-atmospheric pressure can be used. Preferably atmospheric pressure is used during the hydrolysis.

The patent also teaches that the desired N-phosphonomethylglycine is recovered in high purity by dissolving it in water, adjusting the pH of the solution to between 1 and 2, allowing it to crystallize from solution and removing it by filtration.

Example 3 of U.S. Patent 4,427,599 specifically teaches reaction step (c), i.e., the preparation of N-phosphonomethylglycine from the phosphonate reaction product of step (b). The yield that is recited is only 35.49%. Example 4 teaches another preparation of N-phosphonomethylglycine but the yield is only 64%.

Brief Description of the Invention

This invention relates to an improved method of preparing N-phosphonomethylglycine in yields over 80 percent comprising:

(a) hydrolyzing a phosphonate of the formula

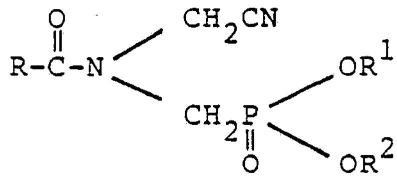

wherein in R, $R^1$ and $R^2$ are $C_1$—$C_4$ alkyl at a temperature between about 55°C to reflux temperature with water in an amount sufficient to provide a mole ratio of water to phosphonate within a range of about 10:1 to about 60:1 and HCl in an amount sufficient to provide a mole ratio of HCl to phosphonate within a range of about 2:1 to about 4:1 or higher to yield an acidic aqueous solution of N-phosphonomethylglycine;

(b) removing volatile organic by-products of the hydrolysis and any organic solvent for the phosphonate from the acidic aqueous solution of N-phosphonomethylglycine either during or after the hydrolyzing step;

(c) precipitating N-phosphonomethylglycine from the acidic solution of N-phosphonomethylglycine by: (1) cooling said solution to below about 80°C; (2) raising the pH of the said solution to within a range of about 1.0 to about 1.8; (3) seeding the solution with 2—4 ppm solid N-phosphonomethylglycine with agitation; and (4) further cooling said solution to about 25°C and continuing agitation and cooled for about 1.5 hours;

(d) recovering the precipitated N-phosphonomethylglycine from its mother liquor; and

(e) washing the recovered N-phosphonomethylglycine with water to remove impurities and ammonium chloride.

Detailed Description of the Invention

In the commercial practice of the last reaction step described in U.S. Patent 4,427,599, it has been found necessary to remove the solvent utilized in the reaction product of step (b) and all organic by-products of the last hydrolysis reaction step before proceeding with the precipitation of N-phosphonomethylglycine (PMG).

Also, the pH of the acid aqueous solution of N-phosphonomethylglycine must be raised to within a certain narrow range to obtain precipitated N-phosphonomethylglycine in high yields.

The by-product $R^3X$ of reaction step (b) should be removed. This by-product normally will be a lower alkyl chloride such as methyl or ethyl chloride and can be conveniently removed by simple venting to an incinerator.

Preferably a majority (up to about 70% by weight) of the solvent (ethylene dichloride) in reaction step (b) should be removed before transferring the phosphonate reaction product of step (b) to a reaction vessel for the last hydrolysis step (c). Preferably, it can be conveniently removed by vacuum stripping with commercial equipment such as a thin film evaporator. The remaining solvent, usually about 20—30% by weight, is intentionally not removed from the phosphonate reactant prior to transfer of the phosphonate to a reaction vessel for the last hydrolysis step. This remaining solvent lowers the viscosity of the phosphonate and allows it to be easily pumped to the reaction vessel for the hydrolysis step. Without some solvent present, the phosphonate is too viscous for transfer.

A suitable reaction vessel for the hydrolysis step is equipped with a reflux head, stirrer and heating and cooling means.

At least 5 mole of water must be used to ensure complete hydrolysis of the phosphonate reactant to N-phosphonomethylglycine.

Preferably, an additional amount of water is used. The total amount of water used should be sufficient to provide a mole ratio of water to phosphonate within a range of about 10:1 to about 60:1, preferably about 25:1 to about 35:1. This preferred amount of water includes water used in a hydrochloric acid solution. These molar ratios correspond, in practice, to initial water solution containing respectively 45 to 35 weight percent phosphonate before the addition of the acid solution. They are selected on a practical engineering basis, considering the water losses during the distillation steps of the organic solvents, the minimum amount of water required to produce the N-phosphonomethylglycine and the attainment of a processable slurry after the crystallization step. The slurry concentration of the recommended process contains 20 to 30% solid N-phosphonomethylglycine.

Generally, the less water used above the 5 mole minimum, the higher the overall yield of the hydrolysis step. However, additional amounts of water yield larger, more filterable crystals of N-phosphonomethylglycine.

At least 2 moles of HCl are required to achieve complete hydrolysis of the phosphonate. Preferably, the HCl is present in an amount sufficient to provide a mole ratio of HCl to phosphonate within a range of about 2:1 to about 4:1 or higher, preferably about 3:1 to about 3.5:1. Larger amounts of HCl are tolerable and

cause the reaction to proceed faster but such excess is not desirable for it must be neutralized after the hydrolysis and the resulting salt must be separated from the precipitated N-phosphonomethylglycine.

In the normal order of addition first the phosphonate then water are added to the reaction vessel. Thirdly, HCl is added to the reaction vessel slowly at a temperature below about 50°C.

Next, the hydrochloric acid solution is slowly heated to a temperature above 80°C, preferably above 100°C, and most preferably to reflux temperature to initiate the hydrolysis and allow for the simultaneous removal of volatile by-products formed by the hydrolysis.

During heating of the hydrochloric acid solution care must be taken to allow a large free board space in the reaction vessel to accommodate gas that is suddenly evolved during the hydrolysis step and the vaporization of the residual solvent.

As a variation, the water is added to the phosphonate solution and the combination mixed and then allowed to settle to form an aqueous solution of the phosphonate and a lower organic layer. At this time, it is preferable to remove the organic layer from the reaction vessel by a simple phase separation. During this phase separation some phosphonate is also removed. It should be recycled to obtain high yields. However, it is not required to remove the organic layer at this time. The organic layer can be removed with volatile organic by-products during the hydrolysis step as described above. Again an adequate free board space must be provided.

Preferably, as an alternative, first water and hydrochloric acid are added to the reaction vessel for the hydrolysis step. Next, the solution is heated to above about 90°C. The phosphonate is added slowly to the hot hydrochloric acid solution, generally over a period of time ranging from about 1 to 2 hours.

In a preferred alternative procedure, the phosphonate is preferably added along with the solvent used in preceding reaction step to a refluxing solution of the hydrochloric acid solution in a suitable reaction vessel. Again, the preferred solvent is ethylene dichloride and it is present in an amount ranging up to 30% by weight, preferably between about 20—25% by weight.

The hydrolysis of the above-identified phosphonate is believed to take place in multiple steps at varying rates.

During the first step the $C_1$—$C_4$ alkyl ester groups of the phosphonate are hydrolyzed at a temperature around 55—110°C with the release of two moles of the corresponding alcohol. The methyl ester is hydrolyzed at a temperature of around 55—65°C and the ethyl ester is hydrolyzed around 75—80°C with the release of ethanol, for example.

The subsequent steps involve: (1) the hydrolysis of the acyl moiety,

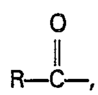

to protonate the nitrogen atom of the phosphonate to which the moiety is attached and yield the acid, R—COOH and (2) the hydrolysis of the cyanomethyl moiety with two moles of water to form an amide and then a carboxylic acid group with the liberation of ammonia which immediately reacts with HCl to form ammonium chloride.

The subsequent hydrolysis steps occur at temperatures of above about 70—90°C.

The hydrolysis is completed by heating at reflux temperature preferably above 105°C, more preferably about 105—110°C for up to about 3 hours.

Volatile organic by-products of the hydrolysis such as alcohols (methanol, ethanol), esters (methyl acetate), chlorides (methyl chloride, ethyl chloride), and any residual solvent (ethylene dichloride) must be substantially removed from the hydrochloric acid solution during or after the hydrolysis of the phosphonate to N-phosphonomethylglycine. These volatile organic products can be removed by stripping them from the reaction vessel along with a small amount of water.

Quite surprisingly it has been found that if these volatile organic by-products and solvent are not substantially removed from the aqueous solution of N-phosphonomethylglycine, precipitation and recovery of solid N-phosphonomethylglycine can not be achieved in high yields within a few hours time. In other words, their presence greatly slows the precipitation rate and yields very fine crystals that are very difficult to separate from the filtrate (mother liquor). Without substantial removal of the organic by-products, yields of 30—60% are obtained in the same time. The term "substantially removed" means at least 50 percent by weight and preferably above about 70 percent by weight.

After completion of the hydrolysis and stripping of the organic products, the acid solution of N-phosphonomethylglycine can be removed from the hydrolysis reaction vessel while hot (above 80°C) with slow agitation and placed in another vessel for precipitation of N-phosphonomethylglycine. However, it is preferred to cause the precipitation to occur in the same vessel.

Precipitation of N-phosphonomethylglycine at high yield must be done within; (1) a critical pH range; (2) with seeding the solution with solid N-phosphonomethylglycine; and (3) with cooling of the hot solution at a temperature below 60°C, preferably below about 55—50°C.

The pH of the hydrochloric acid solution must be raised from around zero to within a range of about 1.0 to about 1.8, preferably within a range of about 1.2 to about 1.6, most preferably about 1.4.

The pH is preferably adjusted by reacting the hydrochloric acid that is in solution and any acidic by-product such as acetic acid, for example, that is in solution with a strong base such as ammonium hydroxide, sodium hydroxide, organic amines and the like. Preferably, the adjustment is made with ammonium hydroxide to form ammonium chloride and water. Ammonium hydroxide is the preferred strong base because the resulting ammonium chloride salt has a very high solubility in water compared to other salts. Most of the ammonium chloride salt is soluble in water and only a very small amount of the salt contaminates the precipitated N-phosphonomethylglycine.

The preferred organic amines have only a very limited solubility in water.

Preferably the pH adjustment is made before the temperature of the the hydrochloric acid solution is lowered to below 80°C.

The hydrochloric acid and acidic by-products can be removed by steam sparging or boiling the acidic aqueous solution of PMG, but such is not preferred. Such is very costly.

If the pH is not adjusted to within the recited range the N-phosphonomethylglycine can not be precipitated in high yields as a fair amount of it remains in solution.

As previously stated, the hydrochloric acid solution of N-phosphonomethylglycine preferably is seeded with solid N-phosphonomethylglycine to obtain high yields of precipitated N-phosphonomethylglycine and large crystals. Preferably, the solution is seeded with 2 to 4 ppm solid N-phosphonomethylglycine, more preferably 1—2 ppm. Preferably the seeding is done at a temperature below about 80°C, preferably between about 65—75°C. At temperatures above about 80°C, the seeding crystals dissolve in the hot hydrochloric acid solution. If the solution is not seeded, crystallization usually does not start until the solution reaches room temperature. Thus, seeding promotes crystallization.

Precipitation of N-phosphonomethylglycine is facilitated by lightly mixing the precipitating solution of N-phosphonomethylglycine. Light mixing causes larger, more easily filterable crystals of N-phosphonomethylglycine to form. High shear mixing breaks the crystal and makes filtration or centrifuging of the precipitated crystals more difficult.

The crystallization is substantially complete when the hot solution temperature is lowered to about 25°C and held for about 1.5 hours. Longer holding times only slightly increase yields. Without the 1.5 hour holding time, yields of only around 70—75 percent are obtained.

The precipitated N-phosphonomethylglycine can be recovered by separating it from the filtrate (mother liquor) by filtration or centrifuging. Centrifuging is the preferred method of recovering the crystal as less water is required to work the crystals.

The separated crystals of N-phosphonomethylglycine are preferably washed with water to remove any impurities such as ammonium chloride.

About 2—3 percent by weight additional yield of N-phosphonomethylglycine can be realized from the wash waters and mother liquor. This is accomplished by (1) neutralizing the wash waters and mother liquor to about pH7 with a base, preferably ammonium hydroxide or sodium hydroxide; (2) evaporating a majority of the neutralized waters; and (3) lowering the pH to within the above recited range, preferably 1.4 with HCl and at below about 60°C, preferably below about 55—50°C and most preferably at about 25°C.

The practice of the process of this invention yields N-phosphonomethylglycine in yields over 80% by weight, typically around 80—90 percent by weight, depending upon the amount of water used in the hydrolysis, pH adjustment and working steps. Purity ranges from 90 to 98 percent in the instant process.

The process of this invention can be better understood by reference to the following specific examples.

## Example 1

In a 500 milliliter (ml), 4-neck round bottom flask fitted with a jacketed water condenser, thermometers, and a 250 ml collection flask, 150 grams (g) of reagent grade HCl solutio (37 wt.%) were added to 150 g of water. The mixed acidic solution was heated under reflux to 100°C.

To the refluxing mixture, 120 g of O,O-dimethyl-N-cyanomethyl-N-acetylaminomethyl phosphonate, hereinafter called "phosphonate", solution (containing 72.5 wt.% phosphonate, 9.3 wt.% ethylene chloride and 18.2 wt.% unknown) were added via a dropping funnel over 45 minutes keeping the vapor temperature above 80°C.

During the addition the distillate was collected in 3 fractions: at 1/2, 2/3 and the end of the phosphonate solution addition. Respectively, 7.8 g, 12.8 g and 21.1 g were collected individually, phase separated in a separatory funnel. The organic layers (lower phases) were weighed and analyzed. Results showed:

1st cut, 1.7 g containing 80.4 wt.% EDC and 1.4 wt.% methanol.

2nd cut, 4.8 g containing 49.7 wt.% EDC and 4.9 wt.% methanol.

3rd cut, 9.4 g containing 35.3 wt.% EDC and 6.3 wt.% methanol.

The temperature of the reaction mixture was allowed to raise from 100°C to 109°C by collecting 43.1 g of distillate. At that temperature (109°C) the reaction was switched to total reflux and 50 g of a 29 wt.% ammonium hydroxide was added slowly via a dropping funnel over about 15 minutes.

The reaction mixture was cooled to 80°C under moderate agitation. The pH of the mixture was measured with a standard pH meter equipped with a temperature compensated electrode and raised from 1.2 to 1.4 by adding the adequate amount of ammonium hydroxide solution.

After the pH adjustment the solution was seeded with a few milligrams of solid N-phosphonomethylglycine and cooled at room temperature under moderate agitation. Solid crystals

appeared suddenly when the temperature reached 60°C and the reaction mixture became a slurry.

After one hour at room temperature, the slurry was filtered under vacuum on a clean, dried and preweighed 500 ml medium frited glass funnel. The mother liquor weighed 259.2 g.

The filter cake was washed with 150 g of water and the water wash was recirculated three times through the cake. 178.3 g of water wash was collected.

The frited glass funnel with the cake was dried in a vacuum oven overnight (50°C and 26 inches of Hg) and weighed.

The dry cake (58.3 g) was removed from the frited glass funnel, homogenized and sampled as a fine white powder.

Analysis showed that the powder contained 93.9 wt.% (N-phosphonomethylglycine) representing 82% overall yield of N-phosphonomethylglycine from the phosphonate.

Example 2

In a 500 ml, 4-neck round bottom flask fitted with a jacketed water condenser, thermometers and a 250 ml collection flask, 115 g of 77.2 wt.% phosphonate solution was mixed with 150 g of water. To the mixture, 150 g of a reagent grade HCl solution (37 wt.%) was added slowly from a dropping funnel over 20 minutes, keeping the temperature below 50°C. The reacton mixture was then heated up from 50°C to 105°C over three hours. During the heat-up period the methanol generated during the reaction and the residual ethylene dichloride were distilled, condensed and collected in the 250 ml reciver flask. The solution started to boil at 65°C.

When the temperature reached 105°C the condenser was switched to total reflux for three hours. The condensate was collected again for 10 minutes. A total of 61.8 g of distillate was obtained. The reaction mixture was then cooled to 70°C and the pH of the solution was adjusted to 1.4 by adding slowly 45.3 g of a 29 wt.% ammonium hydroxide solution with a dropping funnel. The solution was seeded with a few milligrams of solid N-phosphonomethylglycine and cooled to room temperature. Solids started to form at 64°C. The slurry was stirred for about one hour at 25°C and the solids were separated with a 6 inch diameter proportioned laboratory centrifuge. The bowl with the dry cloth was weighed first. The slurry was transferred slowly from the reactor flask into the bowl spinning at 200—300 revolutions per minute (rpm). The filtrate was recycled into the reaction flask until all the solids were isolated.

The rotation speed of the bowl was then increased to 800—900 rpm for 15 minutes and 310 g of filtrate was collected.

The cake was then washed at low speed (300 rpm) with 150 g of water. The water was sprayed on the cake with a 250 ml plastic bottle fitted with an atomizer. The water wash was recycled two times before increasing the speed to 900 rpm to spin dry the cake and 155 g of water was collected.

The bowl with the cake was dried in a vacuum oven overnight (50°C and 26 inches of mercury).

The dry solids (60 g) were removed from the bowl, homogenized and sampled.

Analysis showed that the solids contained 97.8 wt.% N-phosphonomethylglycine representing an 85% overall yield from the phosphonate.

Example 3

A similar experiment was conducted with the same equipment and procedure as in Example 2.

A solution of the phosphonate (127 g, 69.2 wt.%) was mixed with 150 g of water. Reagent grade HCl (150 g) was added from the dropping funnel over 9 minutes of time with the pot temperature rising from 25°C to 37°C. The mixture was heated to reflux for 4.3 hours.

After the reaction was completed (3 hours reflux at 105°C), the condensate was collected and the reaction mixture was cooled to 70°C. Next, 500 g of ALAMINE® 336 (a water insoluble, symmetrical $C_8$—$C_{10}$ alkyl straight chain tertiary amine) was added. The mixture was stirred for 5 minutes at 65°C and then transferred to a heated separatory funnel in which the two phases were separated for 10 minutes at 85°C.

The aqueous phase (lower part) with some solids was transferred to a beaker and pH adjusted from 3.3 to 1.48 by adding slowly 33.5 g of reagent grade HCl solution (37 wt.%). More solids formed at 65°C. The solution and solids were cooled at room temperature, kept for 1 hour under moderate agitation, filtered, washed with 50 g of toluene and dried as in Example No. 1.

Dry solids (66.9 g) were obtained, containing 87.9 wt.% N-phosphonomethylglycine representing an 85% overall yield.

Example 4

A similar experiment was conducted with the same equipment and procedure as in Example 2, except that volatile organic by-products were removed by steam sparging.

The phosphonate solution (132 g, 65.9 wt.%) was mixed with 150 g of water. Next, 150 g of reagent grade HCl was added slowly from a dropping funnel.

When the temperature of the reaction mixture reached 107°C, super-heated steam was spraged into the reaction mixture until the temperature reached 110°C.

The reaction mixture was cooled to 80°C, pH adjusted to 1.2 with 43.2 g of ammonium hydroxide, seeded and cooled to room temperature for one hour.

The solids were isolated, washed and dried as in Example 1.

,Dry solids (65 g) were obtained containing 94.46 wt.% of N-phosphonomethylglycine, representing 90% overall yield.

Example 5

A similar experiment as in Example 2 was conducted, except that volatile organic by-products were removed during the hydrolysis step by vacuum stripping.

After the refluxing period, the reaction mixture was put under controlled vacuum for 1 hour (up to 5 inches of mercury) allowing the temperature to drop to 80°C and 100 g of distillate were collected during this period.

Fresh water (100 g) was added to the hot reaction mixture and the solids were crystallized, isolated, washed and dried as in Example 4.

Dry solids (58.1 g) were obtained containing 96.1 wt.% N-phosphonomethylglycine representing 85% overall yield.

Example 6

A similar experiment was conducted with the same equipment and procedure as in Example 2, except that volatile organic by-products were not removed during or after the hydrolysis step.

The hydrolysis reaction was conducted under reflux at 86°C for 4 hours. After completion of the reaction, the pH of the reaction mixture was adjusted to 1.5 at 65°C with 58.5 g of ammonium hydroxide.

The solution was cooled to room temperature and maintained for 2 hours. Very few solids were obtained.

The mother liquor was left overnight, some solids were noticed 17 hours later. They were filtered, washed and dried as in Example 4.

Only 19.2 g of dry solids were obtained, as compared to 60 g in Example 2. Solids continue to appear in the mother liquor after several weeks, indicating a very slow crystallization rate.

Example 7

A solution of 41.06 g (150 mmoles) of O,O-dimethyl N-acetyl-N-cyanomethylaminomethylphosphonate (assay 80.5 wt.%) in 60 ml of water was prepared in a nitrogen flushed 250 ml, 3-neck round bottom flask equipped with a magnetic stirrer, a reflux condenser, a thermometer, and a fractional distillation head. Concentrated hydrochloric acid (29 ml, 46 g, 454 mmole) was added, the reflux condenser was stoppered, and the mixture was heated to the boiling point. The volatile components were allowed to distill out of the reactor until the head temperature reached 95°C (pot. 107°C). The distillation head was then removed, the reflux condenser was unstoppered (stopper replaced with a nitrogen bubbler), and the mixture was heated at reflux (pot. 107—110°C) for 4 hours. The mixture was cooled to *ca.* 70°C and was then basified with 14.0 g (231 mmoles) of concentrated ammonium hydroxide to a final pH of 1.0 at 70°C. The mixture was homogeneous and dark brown in color at this point. It was cooled to 20°C and allowed to stir for 2 hours before the product was collected by filtration. The collected solid was washed with 25 ml of ice-cold water and dried at *ca.* 40°C *in vacuo* overnight to yield 23.71 g (assay 95.6 wt.%, 134 mmoles, 89.3% corrected yield) of N-phosphonomethylglycine. This procedure was run a total of five times. The average yield was 89.1 ± 1.7% at the 0.05 significance level.

**Claims**

1. An improved method of preparing N-phosphonomethylglycine in yields over 80 percent comprising:

(a) hydrolyzing a phosphonate of the formula

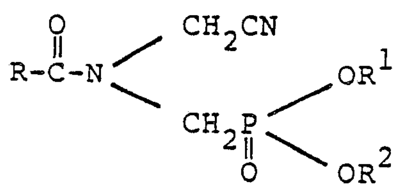

wherein in R, $R^1$ and $R^2$ are $C_1$—$C_4$ alkyl at a temperature between about 55°C to reflux temperature with water in an amount sufficient to provide a mole ratio of water to phosphonate within a range of about 10:1 to about 60:1 and HCl in an amount sufficient to provide a mole ratio of HCl to phosphonate within a range of about 2:1 to about 4:1 or higher to yield an acidic aqueous solution of N-phosphonomethylglycine;

(b) removing volatile organic by-products of the hydrolysis and any organic solvent for the phosphonate from the acidic aqueous solution of N-phosphonomethylglycine either during or after the hydrolyzing step;

(c) precipitating N-phosphonomethylglycine from the acidic solution of N-phosphonomethylglycine by: (1) cooling said solution to below about 80°C; (2) raising the pH of the said solution to within a range of about 1.0 to about 1.8; (3) seeding the solution with 2—4 ppm solid N-phosphonomethylglycine with agitation; and (4) further cooling said solution to about 25°C and continuing agitation and cooled for about 1.5 hours;

(d) recovering the precipitated N-phosphonomethylglycine from its mother liquor; and

(e) washing the recovered N-phosphonomethylglycine with water to remove impurities and ammonium chloride.

2. The method of Claim 1 wherein R, $R^1$ and $R^2$ are $C_1$—$C_2$ alkyl and said pH adjustment is raised to within a range of about 1.2 to about 1.6 and the amount of water is sufficient to provide a mole ratio of about 25:1 to about 35:1 and the HCl is present in an amount sufficient to produce a mole ratio of HCl to phosphonate of about 3:1 to about 3.5:1.

3. The method of Claim 2 wherein R, $R^1$ and $R^2$ are all methyl and said pH adjustment is raised to within a range of about 1.2 to about 1.6.

4. The method of Claim 1 wherein the hydrolyzing step is carried out by slowly adding the phosphonate to a solution of the HCl and water at a temperature above about 90°C.

**Patentansprüche**

1. Verbessertes Verfahren zur Herstellung von N-Phosphonomethylglycin in Ausbeuten über 80% bestehend aus:

a) Hydrolysieren eines Phosphonats mit der Formel

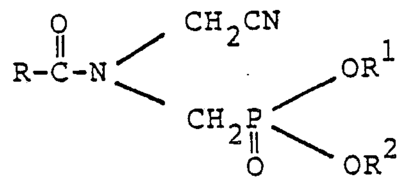

worin R, $R^1$ und $R^2$ $C_1$—$C_4$ Alkylgruppen sind, bei einer Temperatur zwischen etwa 55°C und der Rückflußtemperatur mit einer ausreichenden Menge Wasser, um ein Molverhältnis von Wasser zu Phosphonat im Bereich von etwa 10:1 bis etwa 60:1 zu erhalten, und einer ausreichenden Menge HCl um ein Molverhältnis von HCl zu Phosphonat im Bereich von etwa 2:1 bis 4:1 oder größer zu erhalten, so daß eine saure wässrige Lösung des N-Phosphonomethylglycins gebildet wird;

b) Entfernen flüchtiger organischer Nebenprodukte der Hydrolyse und jedes organischen Lösungsmittels für das Phosphonat aus der sauren wässrigen Lösung des Phosphonats entweder während oder nach dem Hydrolyseschritt;

c) Ausfällen des N-Phosphonomethylglycins aus der sauren Lösung des N-Phosphonomethylglycins durch: (1) Kühlen dieser Lösung auf unter 80°C; (2) Anheben des pHs dieser Lösung auf einen Bereich von etwa 1,0 bis etwa 1,8; (3) Animpfen der Lösung mit 2 bis 4 ppm festem N-Phosphonomethylglycin unter Rühren; und (4) weiteres Kühlen dieser Lösung auf etwa 25°C und Fortsetzung des Rührens und Kühlens für etwa 1,5 h;

d) Abtrennen des ausgefallenen N-Phosphonomethylglycins von seiner Muttelauge; und

3) Waschen des abgetrennten N-Phosphonomethylglycins mit Wasser um Verunreinigungen und Ammoniumchlorid zu entfernen.

2. Verfahren nach Anspruch 1 worin R, $R^1$ und $R^2$ $C_1$—$C_2$ Alkylgruppen sind, der pH auf einen Bereich von etwa 1,2 bis etwa 1,6 gehoben wird, die Menge Wasser ausreicht, um ein Molverhältnis von etwa 25:1 bis etwa 35:1 zu erhalten und die HCl in einer Menge vorhanden ist, die ausreicht, um ein Molverhältnis von HCl zu Phosphonat von etwa 3:1 bis etwa 3,5:1 zu erzeugen.

3. Verfahren nach Anspruch 2, worin R, $R^1$ und $R^2$ alle Methylgruppen sind und der pH auf einen Bereich von etwa 1,2 bis etwa 1,6 gehoben wird.

4. Verfahren nach Anspruch 1, worin der Hydrolyseschritt durch langsame Zugabe des Phosphonats zu einer Lösung der HCl und des Wassers bei einer Temperatur oberhalb von etwa 90°C durchgeführt wird.

**Revendications**

1. Un procédé amélioré de préparation de N-phosphonométhylglycine avec des rendements supérieurs à 80% comprenant les étapes suivantes:

(a) on hydrolyse un phosphonate de formule:

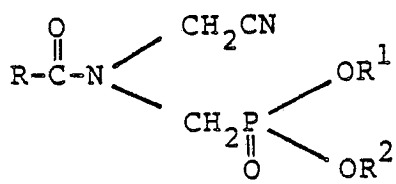

dans laquelle:

R, $R^1$ et $R^2$ représentent un radical alkyle en $C_1$ à $C_4$, à une température comprise entre environ 55°C et la température de reflux en présence d'eau, en quantité suffisante pour réaliser un rapport molaire de l'eau au phosphonate compris entre environ 10/1 et environ 60/1, et de HCl en quantité suffisante pour réaliser un rapport molaire de HCl au phosphonate compris entre environ 2/1 et environ 4/1 ou plus pour obtenir une solution aqueuse acide de N-phosphonométhylglycine;

(b) on élimine les sous-produits organiques volatils de l'hydrolyse et tout solvant organique du

phosphonate dans la solution aqueuse acide de N-phosphonométhylglycine, soit pendant, soit après l'étape d'hydrolyse;

(c) on précipite la N-phosphonométhylglycine dans la solution acide de N-phosphonométhylglycine:

(1) en refroidissant cette solution à une température inférieure à environ 80°C;

(2) en élevant le pH de cette solution à une valeur comprise entre environ 1,0 et environ 1,8;

(3) en ensemençant la solution à l'aide de 2 à 4 ppm de N-phosphonométhylglycine solide sous agitation; et

(4) en poursuivant le refroidissement de cette solution environ à 25°C et en poursuivant l'agitation et le refroidissement pendant environ 1,5 h;

(d) on récupère la N-phosphonométhylglycine précipité dans sa liqueur mère; et

(e) on lave la N-phosphonométhylglycine récupérée à l'aide d'eau pour éliminer les impuretés et le chlorure d'ammonium.

2. Un procédé selon la revendication 1, dans lequel R, $R^1$ et $R^2$ représentent un radical alkyle en $C_1$ à $C_2$ et cet ajustement de pH amène le pH à une valeur comprise entre 1,2 et 1,6, la quantité d'eau étant suffisante pour procurer un rapport molaire compris entre environ 25/1 et environ 35/1 et le HCl étant présent en quantité suffisante pour produire un rapport molaire HCl/phosphonate compris entre environ 3/1 et environ 3,5/1.

3. Un procédé selon la revendication 1, dans lequel R, $R^1$ et $R^2$ sont tous des radicaux méthyles et le pH est ajusté à une valeur comprise entre environ 1,2 et environ 1,6.

4. Un procédé selon la revendication 1, dans lequel l'étape d'hydrolyse est mise en oeuvre par lente addition du phosphonate à une solution de HCl et d'eau à une température supérieure à environ 90°C.